Europäisches Patentamt

European Patent Office

Office européen des brevets

(11) Numéro de publication: **0 214 067**
**A1**

## DEMANDE DE BREVET EUROPEEN

(21) Numéro de dépôt: **86420194.2**

(22) Date de dépôt: **17.07.86**

(51) Int. Cl.⁴: **B 60 P 1/20**

(30) Priorité: **31.07.85 FR 8512056**

(43) Date de publication de la demande:
**11.03.87 Bulletin 87/11**

(84) Etats contractants désignés:
**AT BE CH DE GB IT LI NL SE**

(71) Demandeur: **BENNES MARREL, Société dite**
**Zone Industrielle Sud**
**F-42161 Andrézieux Boutheon Cédex(FR)**

(72) Inventeur: **Corompt, Antoine**
**63 Rue Bergson**
**F-42000 St Etienne(FR)**

(72) Inventeur: **Lablanche, Jean**
**8 rue Gutenberg**
**42100 Saint Etienne(FR)**

(72) Inventeur: **Michalon, Fernand**
**1 rue Emile**
**42100 Saint Etienne(FR)**

(74) Mandataire: **Maisonnier, Jean**
**Bureau Maisonnier 28 Rue Servient**
**F-69003 Lyon(FR)**

(54) **Dispositif basculeur, notamment pour commander le basculement d'une benne sur un véhicule.**

(57) L'invention concerne un basculeur, notamment pour soulever la benne basculante d'un camion.

Le vérin (6), (7) exerce son action (17) sur la benne (4), et sa réaction sur l'axe (8) des bielles triangulaires (9). Il donne ainsi naissance à une réaction (16) qui facilite le décollage de la benne.

Application: diminution des efforts au décollage; possibilité de réduire la section du vérin (6), (7).

Fig 2

Croydon Printing Company Ltd.

EP 0 214 067 A1

1

La présente invention est relative à un dispositif basculeur d'un type nouveau ,destiné à commander le basculement d'une benne sur son châssis porteur.Elle concerne plus particulièrement,quoique non exclusivement,le cas où le châssis porteur est celui d'un véhicule ,par exemple d'un camion , d'une remorque ou d'une semi-remorque.

On connaît,notamment par le brevet français 1 453 849,des dispositifs basculeurs destinés à être montés entre le châssis porteur d'un camion,et la partie inférieure d'une benne basculante équipant ce camion.

On sait qu'un tel dispositif doit tout d'abord satisfaire à des exigences d'encombrement.En effet,il doit pouvoir être monté après coup sur un véhicule existant déjà,sans qu'il soit pour cela nécessaire d'en modifier le châssis .D'autre part,il doit pouvoir être placé dans une hauteur minima,sous la berce ou plancher d'une benne ou d'un conteneur de type également standard .Par ailleurs,le dispositif prenant apoui,d'une part sur le châssis du camion,d'autre part sous la berce de la benne , on doit veiller à ce que ni l'un,ni l'autre de ces deux ensembles standard n'ait à être renforcé,de façon importante du fait d'une trop forte concentration d'efforts à un moment quelconque du fonctionnement .De tout ce qui précède , il résulte que le ou les vérins principaux du basculeur occupent une position très peu inclinée sur l'horizontale , lorsque la benne repose horizontalement sur le châssis . Dans ces conditions , le ou les vérins principaux travaillent suivant un bras de levier minimum au moment du décollement , si bien qu'à cet instant , l'effort demandé au vérin principal est maximum .C'est donc ce moment du fonctionnement qui est pris en considération pour calculer le dimensionnement à attribuer au vérin principal , ainsi qu'aux pièces et articulations supportant les efforts pour la pression d'alimentation à retenir .En dépendent notamment le poids et le coût des divers éléments . On comprend donc l'intérêt qu'il y aurait à réduire la poussée du vérin principal , nécessaire en début de cycle, c'est-à-dire au moment du décollement de la benne.

La présente invention a pour but d'apporter une solution aux problèmes précités,c'est-à-dire de réaliser un dispositif basculeur permettant de réduire la poussée maxima à fournir par le ou les vérins principaux au moment du décollement de la benne.

Un dispositif basculeur selon l'invention,intercalé entre un châssis inférieur fixe et un plateau supérieur basculant articulé sur l'arrière du châssis, comprenant au moins un vérin hydraulique et au moins une bielle triangulaire,est caractérisé en ce que :

- le vérin est articulé par une extrémité sous le plateau basculant alors que son autre extrémité est reliée au premier sommet de la bielle triangulaire ;
- la bielle triangulaire est articulée par son second sommet sur un axe porté par le châssis, alors que son troisième sommet porte au moins un galet capable de rouler sous le fond du plateau pour y exercer une poussée ascendante.

Suivant une autre caractéristique de l'invention, le vérin comporte près de son extrémité inférieure, un axe transversal sur lequel est directement articulé le premier sommet de la ou des bielles triangulaires.

Suivant une autre caractéristique de l'invention, le vérin est relié par un pivot transversal à la première extrémité d'un tirant dont la seconde extrémité s'articule sur le premier sommet de la bielle triangulaire, le pivot transversal prenant appui sur le châssis le long duquel il peut se déplacer au cours du développement du dispositif. Son mouvement peut être réalisé par roulement de galets ou par coulissement de sabots, dans une glissière que porte le châssis.

On constate que, dans tous les cas,le dispositif agit au décollage, c'est-à-dire au début du basculement, à partir de la position de repos où le plateau repose à plat sur le châssis. Pendant ce décollage, on utilise à la fois :

- l'action du vérin qui soulève le plateau auquel il est directement articulé par son extrémité supérieure ;
- la réaction du vérin dont l'extrémité inférieure actionne la bielle pour que le troisième sommet de celle-ci exerce sous le plateau une poussée de décollage supplémentaire.

Le dessin annexé, donné à titre d'exemple non limitatif, permettra de mieux comprendre les caractéristiques de l'invention.

-Fig 1 à 3 illustrent les phases successives du fonctionnement d'un basculeur selon l'invention.

-Fig 4 à 6 sont des vues analogues pour une variante à tirant.

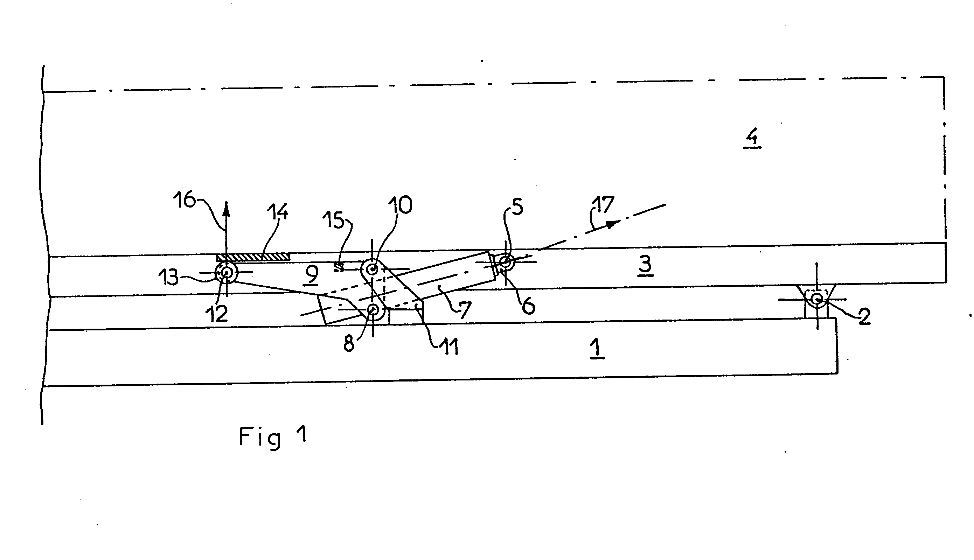

On a représenté sur les figures 1 à 3 un châssis inférieur fixe 1 dont l'arrière porte un axe 2 sur lequel est articulé un plateau basculant 3. Le châssis 1 peut être celui d'un véhicule.

de transport , alors que le plateau 3 constitue le fond d'une benne basculante 4 .

Le plateau 3 comporte un axe 5 sur lequel est articulé le sommet de la tige 6 d'un vérin de levage,dont le cylindre 7 possède à sa partie inférieure des tourillons latéraux 8.

Le vérin 6 , 7 est disposé entre deux bielles triangulaires identiques 9 qui se superposent en projection sur les vues latérales des dessins .Chacune de ces deux bielles 9 possède trois sommets , à savoir :

- un premier sommet articulé sur l'axe 8 du vérin 6 , 7 ;
- un second sommet articulé sur un axe 10 que porte une chape 11 du châssis 1 ;
- un troisième sommet portant l'axe 12 d'un galet 13 qui roule contre une plaque de poussée 14 équipant la face inférieure du plateau basculant 3 .

Enfin,les bielles 9 sont réunies par une traverse 15 située au-dessus du cylindre 7 du vérin , avec un léger jeu quand les trois axes 5 , 10 et 8 sont alignés dans un même plan.

Le fonctionnement est le suivant :

A la position de repos illustrée sur la fig. 1 , le vérin 6,7 est peu incliné sur l'horizontale entre le châssis 1 et le plateau 3 qui y repose.Le plus grand bras 10,12 de chaque bielle 9 s'étend horizontalement vers l'avant du châssis 1.

Lorsqu'on commence à envoyer la pression dans le vérin 6,7 pour l'allonger,le galet 13 exerce contre la plaque 14 une poussée de décollage 16 qui est dirigée de bas en haut,pratiquement à la verticale.Cette poussée de décollage agit donc avec un bras de levier maximum 2,12 par rapport à l'axe de basculement 2.Cela permet de réduire au maximum la poussée longitudinale 17 développée à ce moment par le vérin 6,7.

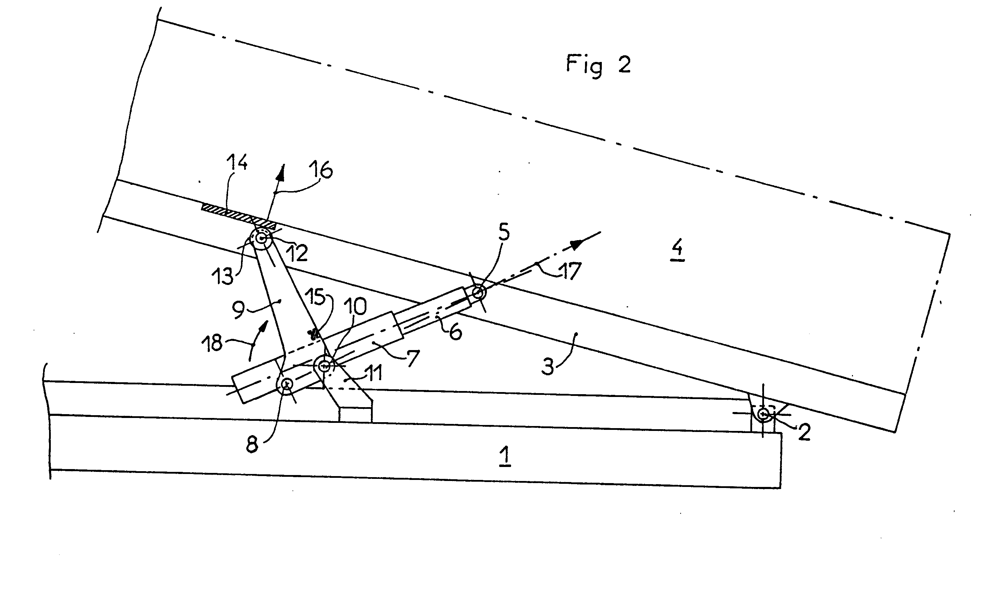

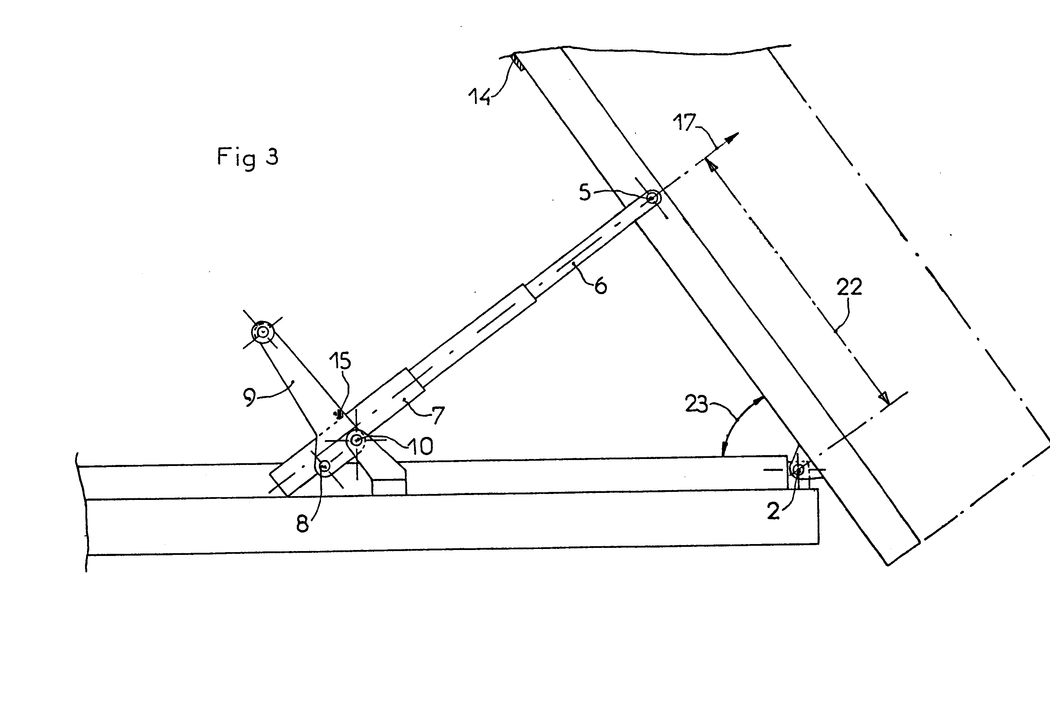

Ainsi , le plateau 3 est soulevé par relevage de la bielle 9 autour de son axe fixe 10 (flèche 18)et par la poussée directe 17 que le vérin 6,7 exerce sur l'axe 5 ,jusqu'à ce que les trois axes 5, 10,et 8 soient alignés dans un même plan (fig. 2).Désormais,cette position de point mort se conserve pendant la suite du mouvement où les bielles 9 restent immobiles par rapport au vérin 6,7 dont elles accompagnent les oscillations.Pendant toute cette suite du mouvement,jusqu'à la position de la fig. 3,c'est désormais l'ensemble rigide 6,7,9 qui bascule autour de l' axe fixe 10,cependant que le galet 13 perd contact avec la plaque 14 qui continue son ascension avec le plateau 3.

La traverse 15 évite tout basculement intempestif des bielles 9 au-delà de la position de point mort illustrée sur la fig.2 et tout auto-basculement de la benne.

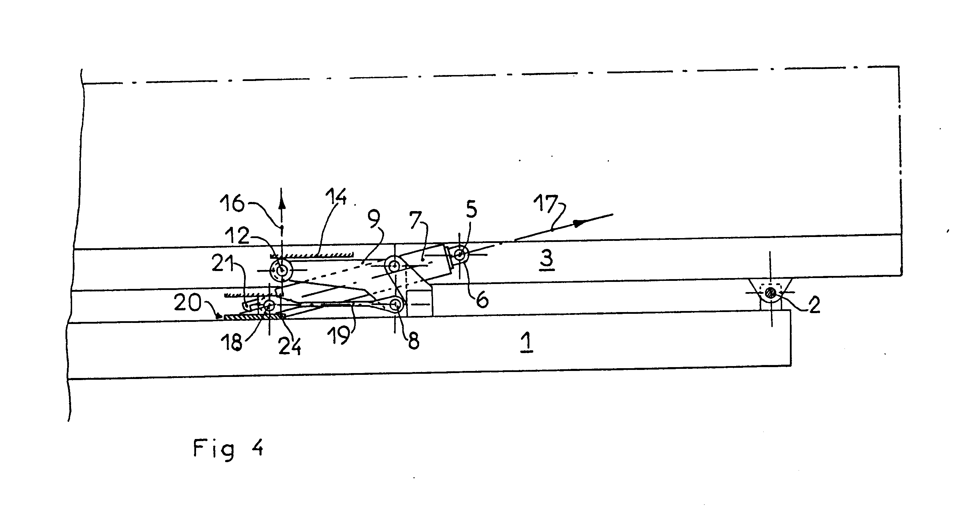

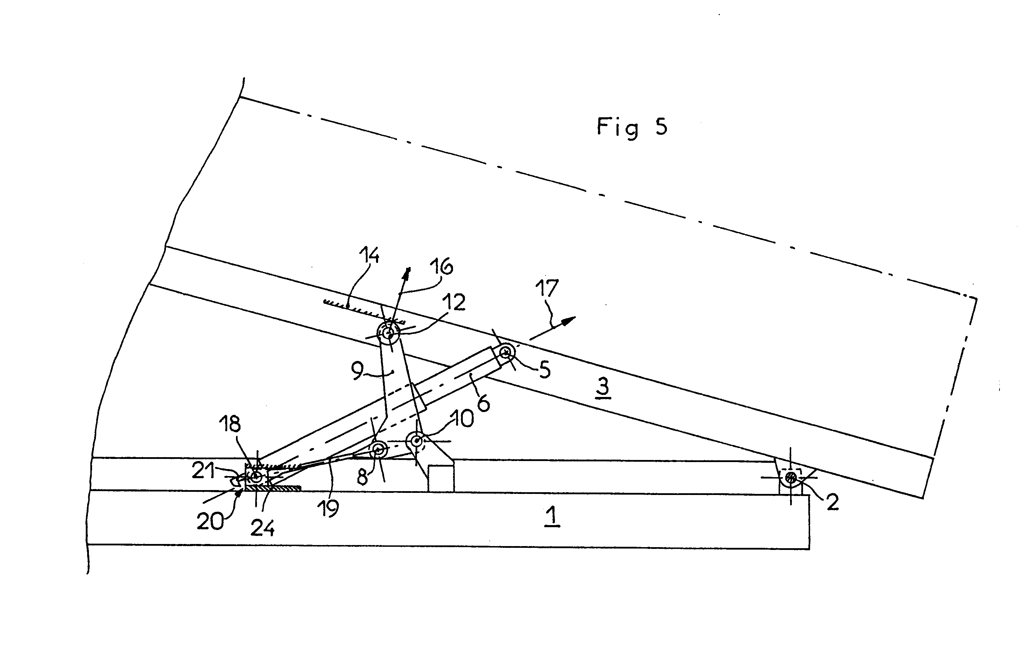

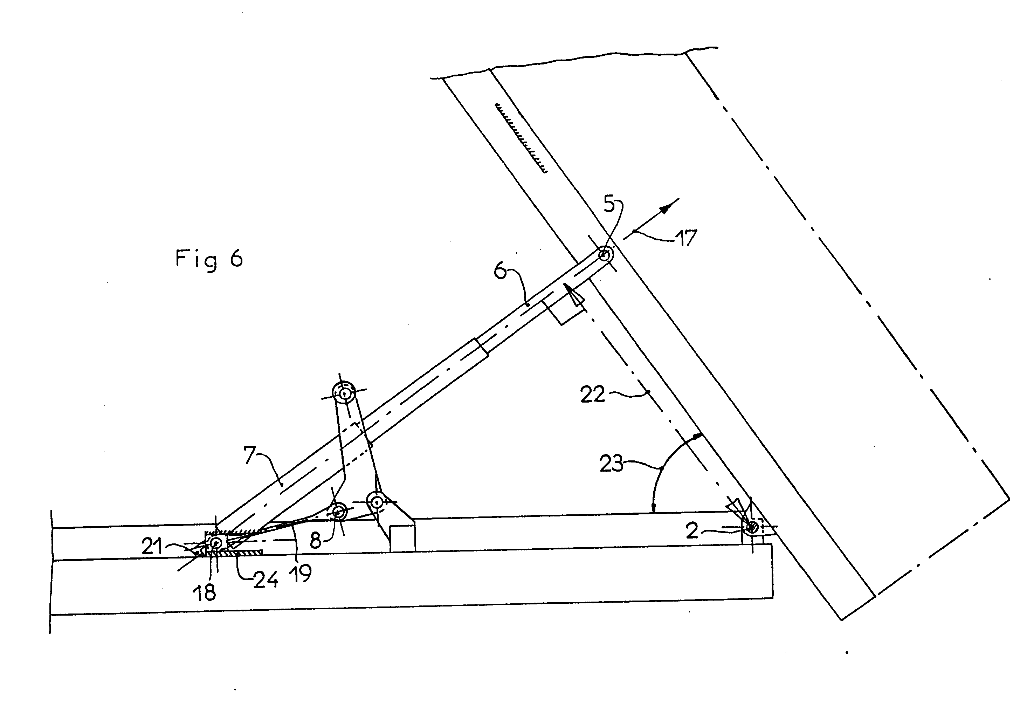

Dans la variante des Fig. 4 à 6, le vérin 6,7 ne possède plus de tourillons latéraux 8, mais un axe 18 disposé de façon classique sous le fond du cylindre 7. D'une part cet axe 18 est relié par deux tirants 19, situés de part et d'autre du vérin 6,7, au premier sommet 8 des bielles triangulaires 9. D'autre part les extrémités de l'axe 18 coulissent dans des glissières longitudinales 24 solidaires du châssis 1. L'arrière des glissières 24 définit une dent 20 susceptible de recevoir en fin de soulèvement du plateau 3 (Fig 5 et 6) le bec d'un crochet 21 qui dépasse sous le cylindre 7 dont il est solidaire.

Dans cette variante, par contre, il n'est plus nécessaire de relier les deux bielles 9 par une traverse de butée 15.

Le fonctionnement est le suivant :

Lorsqu'on envoie la pression dans le vérin 6,7 alors que l'ensemble est en position de repos (Fig. 1), chaque tirant 19 exerce une traction sur le sommet 8 de sa bielle 9 qui, comme précédemment, exerce sous la plaque de poussée verticale 16. Cela provoque le décollement du plateau 3 qui commence à se soulever, à la fois du fait de cette poussée 16, et sous la poussée directe 17 que le vérin 6,7 exerce sur l'axe 5.

Au cours de ce soulèvement, l'axe 18 se déplace vers l'arrière entre les glissières 24 jusqu'à la position de la Fig. 2 où le bec du crochet 21 vient s'enclencher derrière la dent 20 des glissières. Désormais, les trois axes 10,8 et 18 sont alignés dans un même plan, ce qui correspond à une position de point mort. Ils resteront dans cette position ainsi que les bielles 9 pendant toute la suite du mouvement, jusqu'à la position de la Fig. 3. Pendant toute cette dernière phase, le basculement du plateau 3 a lieu sous la seule poussée 17 du vérin 6,7 qui, ayant pivoté vers le haut, possède désormais par rapport à l'axe 2, un bras de levier 22 important.

On comprend que l'invention possède entre autres les avantages suivants :

- toutes choses égales par ailleurs, ce basculeur assure un angle de basculement 23 important ;
- les efforts sont multipliés au décollage (Fig. 1 et 4) du fait de la poussée verticale 16 s'ajoutant à la poussée oblique 17 ;

- la cinématique décrite utilise non seulement l'action 17 du vérin 6,7, mais aussi sa réaction qui, agissant sur le sommet 8, produit la poussée de décollage 16 ;

- on réduit les efforts sur les éléments et sur les articulations, d'une quantité allant de 30 à 65 % au décollage ;

- l'effort 17 du vérin 6,7 reste sensiblement constant des Fig. 1, 4 aux Fig. 3, 6) ;

- cette réduction des efforts au décollage permet de choisir un vérin 6,7 à section transversale réduite ;

- si les bielles 9 sont logées de part et d'autre d'un seul vérin central 6,7, on peut prévoir qu'elles servent de guides de chaque côté du cylindre 6 pour lui interdire tout fléchissement transversal.

Bien entendu, le vérin 6,7 peut être de tout type connu, à simple expansion ou à expansions multiples (cas des Fig. 3 et 6). Le guidage de l'axe 18 dans les glissières 19 peut être assuré par des galets de roulement ou par des sabots coulissants.

Il est clair que le basculeur pourrait être monté en sens inverse de ce qui a été représenté sur les dessins. Autrement dit, l'axe du second sommet (10) serait solidaire du plateau supérieur (3), ainsi qu'éventuellement les glissières (19), alors qu'au contraire la poussée du troisième sommet (12) s'exercerait sur une ou des plaques (14) solidaires du châssis inférieur (1)

Le basculeur pourrait également être inversé d'avant en arrière , le vérin 6 , 7 étant dirigé vers l'avant et les bielles 9 vers l'arrière du véhicule .

Enfin , on pourrait imaginer la même cinématique avec deux vérins latéraux et une seule bielle centrale.

6

REVENDICATIONS

1 - Dispositif basculeur intercalé entre deux ensembles,à savoir un châssis inférieur fixe (1) et un plateau supérieur basculant (3) articule en (2) sur l'arrière du châssis (1),comprenant au moins un vérin hydraulique (6),(7) et au moins une bielle triangulaire (9) , caractérisé en ce que :
- le vérin (6 ),(7) est articulé par une extrémité en (5) sur l'un des deux élém"nts (3) ,alors que son autre extrémité est reliée au premier sommet (8) de la bielle triangulaire (9)
- la bielle triangulaire (9) est articulée par son second sommet sur un axe (10) porté par le châssis (1) ,alors que son troisième sommet (13) porte au moins un galet (3)capable de rouler contre l'autre élément pour y exercer une poussée ascendante (16),le vérin (6),(7) exerçant une poussée (17).

2 - Disposiitf basculeur suivant la revendication 1,caractérusé en ce que le vérin (6),(7) comporte près de son extrémité inférieure ,un axe transversal sur lequel est directement articulé le premier sommet (8) de la ou des bielles triangulaires (9).

3 - Disposiitf basculeur suivant la revendication 31,caractérisé en ce que le vérin (6),(7) est relié par un pivot transversal (18) à la première extrémité d'un tirant (19) dont la seconde extrémité s'articule sur le premier sommet (8)de la bielle triangulaire (9),le pivot transversal (18) prenant appui sur l'élément (1) correspondant le long duquel il peut se déplacer au cours du développement du dispositif;

4 - Dispositif basculeur suivant la revendication3,caractérisé en ce que le pivot (18) comporte des galets qui roulent dans une glissière (19) que porte l'élément (1) correspondant .

5 - Dispositif basculeur suivant la revendication 3,caractérisé en ce que le pivot (8) comporte des sabots qui glissent dans une glissière (19)portée par l'élément (1) correspondant .

6 - Dispositif suivant la revendication 3,caractérisé en en ce qu'au-delà de l'axe (18),le vérin (6),(7) comporte un crochet (21) dont le be c est susceptible de venir à la fin de la phase de décollage , s'accrocher derrière une dent (20) de la glissière (24) .

7 - Dispositif basculeur suivant l'une quelconque des revendications précédentes,caractérisé en ce que l'axe (10) du second sommet de la bielle triangulaire (9) est porté par le châssis (1), alors que le troisième sommet (12) exerce sa poussée(16) sous le plateau (3) du fond de la benne (4).

8 - Dispositif basculeur suivant l'une quelconque des revendications précédentes, caractérisé en ce que l'axe (10) du second sommet de la bielle triangulaire (9) est porté par le plateau (3) du fond de la benne (4), alors que le troisième sommet (12) exerce sa poussée (16) contre le châssis (1).

9 - Dispositif basculeur suivant l'une quelconque des revendications précédentes, caractérisé en ce que les bielles triangulaires (9) sont au nombre de deux, disposées de part et d'autre du vérin (6), (7) auquel elles interdisent tout fléchissement transversal.

10 - Dispositif basculeur suivant l'une quelconque des revendications précédentes , caractarisé en ce que le système comporte deux vérins (6) ,(7) latéraux et une bielle triangulaire centrale (9) .

0214067

Fig 1

Fig 2

0214067

Fig 3

Fig 4

0214067

Fig 5

Fig 6

# Office européen des brevets

# RAPPORT DE RECHERCHE EUROPEENNE

EP 86 42 0194

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-1 418 302 (MARREL) <br> * En entier * | 1 | B 60 P 1/20 |
| A | DE-A-2 113 112 (BIRKELAND) <br> * Revendication 1; figure 2 * | 1 | |
| A | FR-A-2 430 868 (GEMARO) <br> * En entier * | 1 | |
| A | US-A-4 176 881 (RAY COLE) | | |

---

|  |  |
|---|---|
| | DOMAINES TECHNIQUES RECHERCHES (Int. Cl.4) |
| | B 60 P 1/20 <br> B 60 P 1/16 |

Le présent rapport de recherche a été établi pour toutes les revendications

| Lieu de la recherche | Date d'achèvement de la recherche | Examinateur |
|---|---|---|
| LA HAYE | 12-11-1986 | SCHMITTER J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille. document correspondant

OEB Form 1503 03 82